# EUROPÄISCHE PATENTANMELDUNG

(11) **EP 4 825 712 A1**
(43) Veröffentlichungstag der Anmeldung: **21.10.2026**
(21) Anmeldenummer: 25171514.0
(22) Anmeldetag: 19.04.2025
(51) Int. Cl.: B62H 3/06, B62H 3/00, E04H 6/00

(54) **FAHRRADGARAGE ZUR AUFNAHME MEHRERER ZWEIRÄDER**

(71) Anmelder: KARUSO GmbH, 88400 Biberach (DE)
(72) Erfinder: SCHMID, Christian, 88400 Biberach (DE)
(74) Vertreter: Dalek, Arkadius Jan

(57) **Zusammenfassung**

Fahrradgarage zur Aufnahme mehrerer Zweiräder, insbesondere Fahrräder, mit mehreren Zwischenwänden, die radial von einem Zentrum der Fahrradgarage nach außen verlaufen, wobei jeweils zwei einander benachbarte Zwischenwände ein Abteil begrenzen, wobei jedes Abteil in einer Gebrauchsstellung der Zwischenwände geeignet ist, ein Zweirad darin aufzunehmen, wobei die Zwischenwände lösbar mit dem Zentrum befestigt sind, sodass sie aus der Gebrauchsstellung in eine Transportstellung überführbar sind, in der der von den Zwischenwänden begrenzte Raum gegenüber der Gebrauchsstellung verringert ist. Ferner betrifft die Erfindung ein Verfahren zum Auf- und Abbau einer solchen Fahrradgarage.

## Beschreibung

Die Erfindung betrifft eine Fahrradgarage zur Aufnahme mehrerer Zweiräder, insbesondere Fahrräder, im Einzelnen gemäß den Merkmalen der unabhängigen Ansprüche. Ferner betrifft die Erfindung ein Verfahren zum Auf- und Abbau einer solchen Fahrradgarage.

Aus dem Stand der Technik sind verschiedene Lösungen zur sicheren und wettergeschützten Aufbewahrung von Fahrrädern bekannt. Üblicherweise handelt es sich hierbei um starre Unterstände oder fest installierte Boxensysteme, die nicht oder nur mit erheblichem Aufwand demontierbar sind. Einzelne Boxen für jeweils ein Fahrrad sind platzintensiv und in der Aufstellung wenig flexibel. Alternative Systeme, die mehrere Fahrräder aufnehmen können, bieten häufig keinen modularen Aufbau oder lassen sich nicht kompakt transportieren.

Die bekannten Lösungen sind wenig flexibel in Aufbau und Nutzung, lassen sich meist nicht einfach demontieren oder transportieren und benötigen häufig viel Platz bei der Lagerung oder im Betrieb.

Ausgehend von dem bekannten Stand der Technik soll die Erfindung eine Fahrradgarage bereitstellen, die mehrere Zweiräder gleichzeitig aufnehmen kann, dabei modular aufgebaut und platzsparend transportierbar ist. Zudem soll die Montage und Demontage einfach, möglichst werkzeuglos und ohne Fachkenntnisse durchführbar sein.

Aufgabe der vorliegenden Erfindung soll es daher sein, eine Fahrradgarage sowie ein Verfahren zum Auf- und Abbau einer solchen Fahrradgarage bereitzustellen, wobei die Fahrradgarage einen modularen Aufbau aufweist, platzsparend transportierbar ist und einen einfachen und flexiblen Auf- und Abbau ermöglicht.

Diese Aufgabe wird durch die erfindungsgemäßen Gegenstände nach den unabhängigen Ansprüchen gelöst. Die abhängigen Ansprüche stellen besonders bevorzugte Ausführungsformen der Erfindung dar.

Eine erfindungsgemäße Fahrradgarage zur Aufnahme mehrerer Zweiräder, insbesondere Fahrräder, weist mehrere Zwischenwände auf, die radial von einem Zentrum der Fahrradgarage nach außen verlaufen, wobei jeweils zwei einander (direkt) benachbarte Zwischenwände ein Abteil begrenzen, wobei jedes Abteil in einer Gebrauchsstellung der Zwischenwände geeignet ist, ein Zweirad darin (vollständig, sodass das Abteil mittels einer Zugangstür abgeschlossen und das Zweirrad sicher darin verwahrt werden kann) aufzunehmen, und wobei die Zwischenwände lösbar mit dem Zentrum befestigt sind, sodass sie aus der Gebrauchsstellung in eine Transportstellung überführbar sind, in der der von den Zwischenwänden begrenzte Raum gegenüber der Gebrauchsstellung verringert ist. Dadurch ergibt sich der Vorteil, dass sich die Fahrradgarage in eine kompakte Form bringen lässt, die leicht transportiert oder gelagert werden kann.

Vorteilhaft umfasst die Fahrradgarage mehrere Abteile, die gemeinsam einen (im Wesentlichen) ringförmigen Raum um das Zentrum der Fahrradgarage ausbilden, wobei bevorzugt in einem Querschnitt um eine vertikale Drehachse der Raum in der Gebrauchsstellung entweder einem Kreissektor mit radial außen vorgesehener runder Außenkontur oder im Wesentlichen einem Trapez mit flacher radial äußerer Seite entspricht. Dies ermöglicht eine besonders platzsparende und ästhetische Anordnung der Abteile über den gesamten Umfang der Fahrradgarage. Die Abteile können so bemessen sein, dass sie im Wesentlichen dasselbe Raumvolumen umhüllen.

Bevorzugt umfasst die Fahrradgarage eine klappbare, verschiebbare, herausnehmbare oder aus mehreren ineinander schiebbaren Segmenten bestehende Ausführung der Zwischenwände. Auch Kombinationen der genannten Maßnahmen sind möglich. Dadurch wird eine besonders flexible Handhabung und platzsparende Lagerung der Einzelteile der Fahrradgarage ermöglicht.

Nach einer besonderen Ausführungsform ist die Fahrradgarage nach Art eines Rondells oder Karussells aufgebaut und um eine im Wesentlichen vertikale Drehachse drehbar, wobei das Zentrum insbesondere auf einem Ständer drehbar gelagert ist, der bevorzugt mindestens drei Beine aufweist, die am Umfang um das Zentrum verteilt sind, wobei die Beine bevorzugt lösbar befestigbar sind. Dies ermöglicht eine besonders einfache Ausrichtung und Aufstellung vor Ort. So können die Zweiräder auch gemeinsam mit dem Zentrum um die Drehachse verschwenkbar sein, insbesondere um 360°.

Bevorzugt handelt es sich bei der Fahrradgarage um eine überdachte Ausführung, bei der die Abteile jeweils durch ein Dachelement nach oben hin abgeschlossen sind, wobei bevorzugt die Dachelemente kreissektor- oder trapezförmig ausgebildet sind, wobei jeweils ein Dachelement bevorzugt auf den oberen Kanten einander direkt benachbarter Zwischenwände angeordnet ist, wobei insbesondere die obere Kante der Zwischenwand eine Sicke aufweist, die zur Ableitung von Regenwasser von der Mitte nach radial außen dient und damit zugleich die Regenrinne bildet, wobei die Sicke insbesondere einteilig mit der jeweiligen oberen Kante der Zwischenwand ausgeführt ist, und bevorzugt das Dach als Flachdach oder mit Gefälle ausgebildet ist, wobei insbesondere das Gefälle vom Zentrum der Fahrradgarage nach radial außen verläuft. Dies stellt eine effektive Regenwasserableitung und Witterungsbeständigkeit sicher.

Bevorzugt ist die Fahrradgarage in Draufsicht mehreckig oder kreisförmig ausgeführt. Diese Geometrien ermöglichen eine effiziente Raumausnutzung und harmonische optische Integration in städtische oder private Umgebungen.

Nach einer weiteren bevorzugten Ausführungsform weist das Zentrum oben eine Deckplatte und unten eine Bodenplatte auf, an denen die Zwischenwände jeweils befestigt, insbesondere eingehangen sind, wobei die Befestigung bevorzugt über Bolzen erfolgt, die in einen Rastmechanismus in mindestens der Deckplatte oder der Bodenplatte oder beiden eingreifen, wobei insbesondere die Zwischenwände um die Achse eines solchen Bolzens verschwenkbar sind, um den zwischen zwei Zwischenwänden begrenzten Raum eines Abteils zu verringern, oder durch Lösen der Bolzen von der Deck- und Bodenplatte lösbar entfernbar sind. Dadurch ist ein einfacher Auf- und Abbau ohne (Spezial-)Werkzeug möglich.

Bevorzugt weist jedes Abteil eine Zugangstür auf der radial äußeren Seite auf. Dies ermöglicht den individuellen Zugang zu jedem Abteil. Damit ist jedes Abteil von fünf von sechs Raumseiten begrenzt, sodass das Zweirad darin sicher, auch witterungs- und vandalismussicher verstaut ist.

Bevorzugt sind die Stirnseiten der einander (direkt) benachbarten Zwischenwände abwechselnd mit Beschlägen und Schließblechen versehen, sodass sich gemeinsam mit einer zwischen den einander direkt benachbarten Zwischenwänden angeordneten Zugangstür eine verschließbare Verbindung ergibt, wobei die Zugangstür insbesondere lösbar an den Zwischenwänden montierbar ist. Dies gewährleistet eine sichere und gleichzeitig flexible Türmontage. Zudem können oben und unten an den Zwischenwänden Leisten vorgesehen sein, die einen Türrahmen bilden.

Bevorzugt weist jedes Abteil eine Haltevorrichtung auf, die so eingerichtet ist, dass ein Zweirad von einer horizontalen Abstellposition, in der es auf zwei Rädern steht, in eine vertikale Position überführt und dabei angehoben wird. Dadurch kann der Platzbedarf im Inneren weiter reduziert werden. Vor allem kann die radiale Erstreckung der Fahrradgarage reduziert werden, indem es so eingerichtet ist, das das radiale Außenmaß so bemessen ist, dass das hochkant über die Haltevorrichtung aufgenommene Zweirad gerade noch so in das Abteil passt, sobald die Zugangstür des Abteils geschlossen ist. Es kommt dann auf die Höhe des Fahrrads vom Boden gemessen (in Vertikalrichtung) anstelle auf seine Länge (in Horizontalrichtungan.

Bevorzugt erfolgt das lösbare Befestigen der Zwischenwände und der Türen sowie der Dachelemente werkzeuglos und ausschließlich von Hand. Dies vereinfacht den Auf- und Abbau erheblich.

Nach einer besonderen Ausführungsform ist jeder Zugangstür und damit jedem Abteil ein herkömmliches oder bevorzugt ein elektronisches Schloss zugeordnet, das die jeweilige Zugangstür verschließen oder öffnen kann. Dies erhöht die Sicherheit und ermöglicht eine digitale Zugangskontrolle.

Bevorzugt ist die Fahrradgarage mit einem elektronischen Zugangskontrollsystem zur selektiven Freigabe einzelner Abteile versehen. Dies erlaubt eine zentrale Steuerung des Zugangs, etwa über ein Buchungssystem oder eine App.

Die Erfindung betrifft ferner ein Verfahren zum Auf- und Abbau einer erfindungsgemäßen Fahrradgarage, umfassend die folgenden Schritte: Bereitstellen eines Zentrums, Befestigen mehrerer Zwischenwände radial vom Zentrum nach außen in einer lösbaren Weise, derart, dass jeweils zwei einander benachbarte Zwischenwände ein Abteil begrenzen, sodass jedes Abteil in einer Gebrauchsstellung der Zwischenwände geeignet ist, ein Zweirad darin aufzunehmen, sowie Überführen der Zwischenwände aus einer Gebrauchsstellung, in der die Abteile zur Aufnahme von Zweirädern geeignet sind, in eine Transportstellung, in der der durch die Zwischenwände begrenzte Raum verringert ist.

Bevorzugt umfasst das Verfahren, insbesondere nach Schritt c) des erfindungsgemäßen Verfahrens das lösbare Befestigen oder Demontieren der Zugangstüren auf der radial äußeren Seite zwischen benachbarten Zwischenwänden und das lösbare Befestigen oder Demontieren der Dachelemente auf den oberen Kanten der Zwischenwände. Dadurch wird eine vollständige Demontage ermöglicht.

Die Vorteile der Erfindung sollen nun anhand eines bevorzugten Ausführungsbeispiels und der Figuren näher dargestellt werden.

Es zeigen:
Fig. 1 eine räumliche Darstellung einer aufgebauten Fahrradgarage gemäß einer Ausführungsform in einer mehreckigen Außenkontur;
Fig. 2 den Gegenstand von Fig. 1 in einer Vorderansicht;
Fig. 3 eine räumliche Darstellung einer aufgebauten Fahrradgarage gemäß einer Ausführungsform in einer runden Außenkontur;
Fig. 4 eine räumliche Darstellung des Innenlebens einer im Aufbau befindlichen Fahrradgarage wie sie in einer der Fig. 1 bis 3 gezeigt;
Fig. 5 eine räumliche Darstellung des Innenlebens einer im Zusammenbau befindlichen Fahrradgarage gemäß wie sie in einer der Fig. 1 bis 4 gezeigt ist in einer Transportstellung;
Fig. 6 den Gegenstand von Fig. 5 in einer Draufsicht.

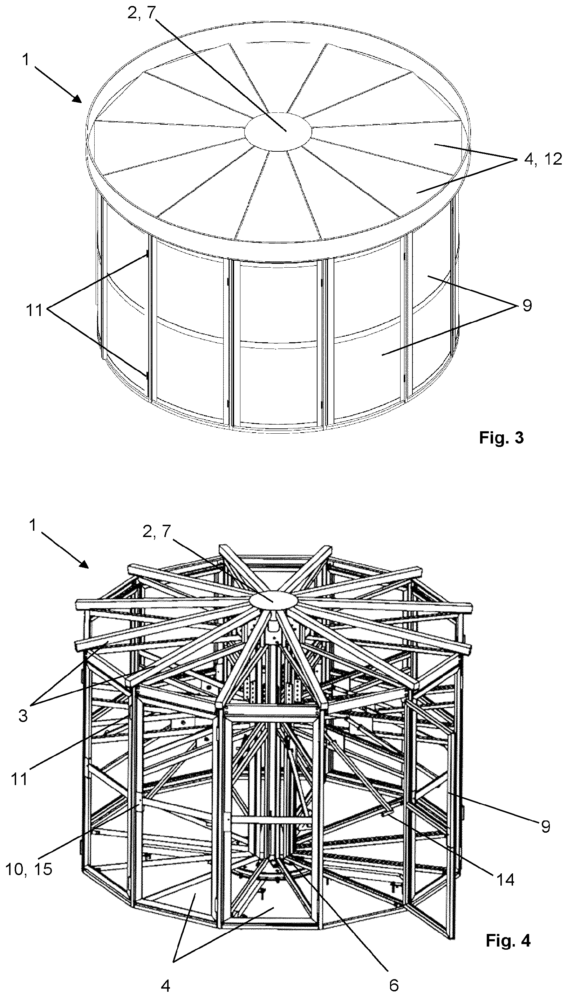

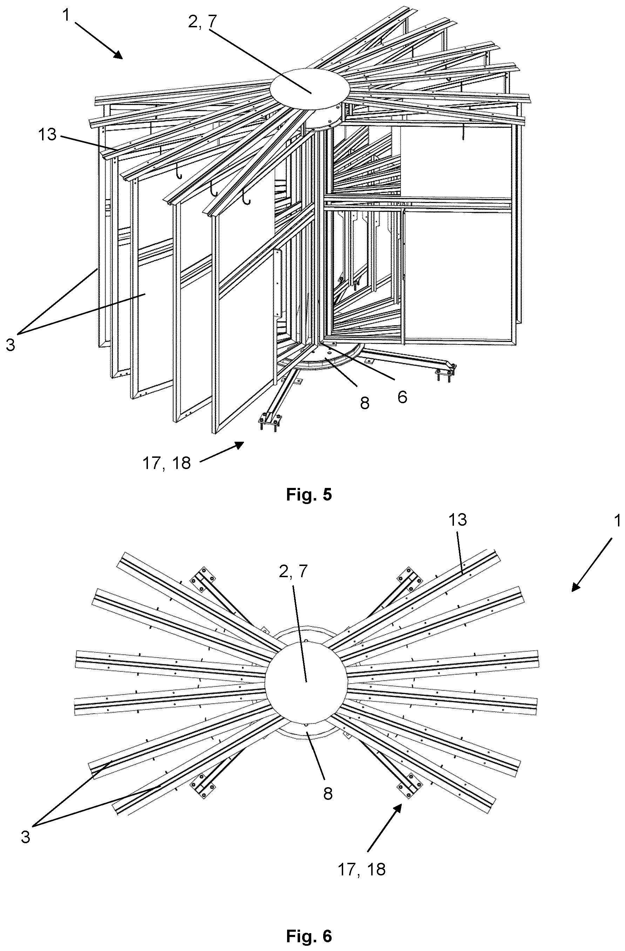

Die Fahrradgarage 1 weist ein mittig angeordnetes Zentrum 2 auf, von dem mehrere Zwischenwände 3 (siehe Fig. 4 bis 6) radial nach außen verlaufen. Jeweils zwei benachbarte Zwischenwände 3 begrenzen ein Abteil 4, in dem ein Zweirad aufgestellt werden kann. Die Zwischenwände 3 sind lösbar mit dem Zentrum 2 verbunden, etwa über Bolzen 6 (siehe Fig. 4 und 5), die in Rastmechanismen in einer Deckplatte 7 und einer Bodenplatte 8 eingreifen. Die Zwischenwände 3 können um die Achse der Bolzen 6 verschwenkt werden oder vollständig entfernt werden, um die Fahrradgarage 1 in eine Transportstellung zu überführen.

Mehrere Abteile 4 bilden gemeinsam einen ringförmigen Raum um das Zentrum 2. Die Abteile 4 sind über Zugangstüren 9 auf der radial äußeren Seite zugänglich. Die Zugangstür 9 ist zwischen zwei Zwischenwänden 3 angeordnet, die an ihren Stirnseiten abwechselnd mit Schließblechen 10 und Beschlägen 11 versehen sind.

Über den Zwischenwänden 3 sind Dachelemente 12 angeordnet, die hier in Form von Trapezen ausgebildet sind. Jedes Dachelement 12 liegt auf den oberen Kanten zweier benachbarter Zwischenwände 3 auf. Die obere Kante jeder Zwischenwand 3 weist eine Sicke 13 (siehe Fig. 5 und 6) auf, die als Regenrinne dient und Regenwasser radial nach außen ableitet. In Fig. 4 sind die Türblätter der Türen 9 und die Dachelemente 12 ausgeblendet, um die Sicht auf das Innenleben der Fahrradgarage 1 freizugeben.

Eine Haltevorrichtung 14 im Inneren eines jeden Abteils 4 erlaubt es, das Zweirad aus der horizontalen Abstellposition in eine vertikale Position zu überführen.

Schlösser 15 an den Zugangstüren 9 ermöglichen eine Verriegelung und können mit einem Zugangskontrollsystem verbunden sein, das über eine zentrale Steuerung die Freigabe der einzelnen Abteile 4 ermöglicht.

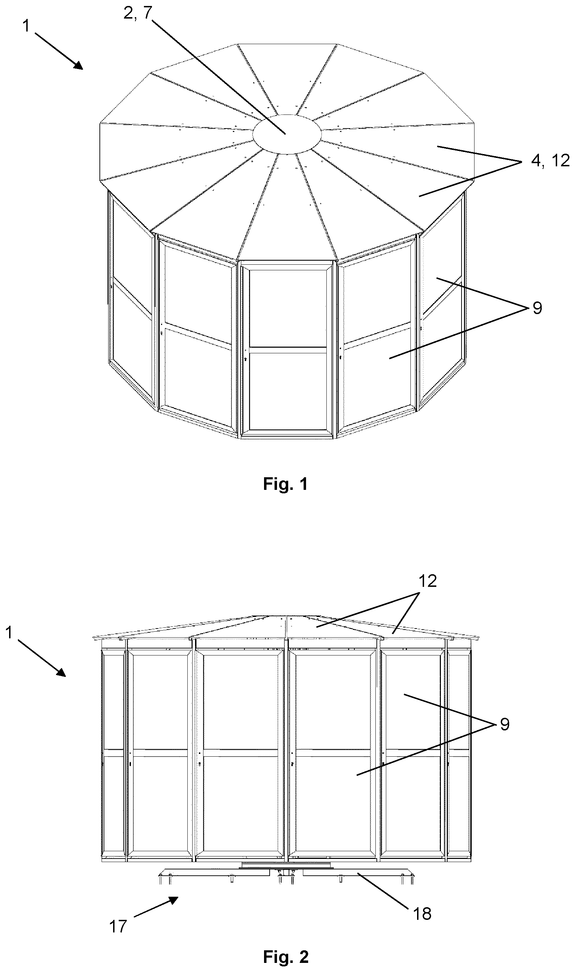

Der Aufbau der erfindungsgemäßen Fahrradgarage 1 erfolgt in mehreren strukturierten Schritten und ist dank des modularen Designs und der bevorzugt werkzeuglosen Befestigung einfach und effizient durchführbar:
Zunächst wird das Zentrum 2 der Fahrradgarage 1 bereitgestellt. Dieses Zentrum 2 kann auf einem Ständer 17 (siehe Fig. 2, 5 und 6) mit mehreren, vorzugsweise drei, hier 4 radial zum Zentrum 2 angeordneten Beinen 18 montiert sein, die für einen stabilen Stand sorgen. Das Zentrum 2 weist oben die Deckplatte 7 und unten eine Bodenplatte 8 auf, die als Verbindungselemente für die weiteren Zwischenwände 3 dienen.

Im nächsten Schritt werden die Zwischenwände 3 radial vom Zentrum 2 nach außen in die dafür vorgesehenen Aufnahmen an Deckplatte 7 und Bodenplatte 8 eingehängt oder wie heri aus der in Fig. 5 gezeigten Transportstellung in die in Fig. 4 gezeigte Gebrauchsstellung verschwenkt. Sodann werden diese in der Gebrauchsstellung mittels der Bolzen 6 fixiert. Die Bolzen 6 greifen in Rastmechanismen ein, die in der Deckplatte 7 und/oder der Bodenplatte 8 ausgebildet sind. Die Zwischenwände 3 können dabei je nach Ausführungsform klappbar, verschiebbar oder ausziehbar sein, was die Handhabung zusätzlich erleichtert. In der Ausführungsform der Fig. 5 und 6 sind die Zwischenwände 3 klappbar bzw. verschwenkbar ausgeführt, also aus der sternförmigen, radialen Ausrichtung, wie sie in der Fig. 4 gezeigt ist, also der Gebrauchsstellung, in die Transportstellung verbringbar.

Jeweils zwei benachbarte Zwischenwände 3 begrenzen dann in der Gebrauchsstellung, wie in Fig. 4 gezeigt, ein Abteil 4, das zur Aufnahme genau eines Zweirads dient. Sobald alle Zwischenwände 3 befestigt sind, ergibt sich ein kreisförmiger oder mehreckiger Grundriss mit mehreren Abteilen 4, die um das Zentrum 2 herum angeordnet sind.

Anschließend werden an der radial äußeren Seite der Abteile 4 die Zugangstüren 9 zwischen jeweils zwei Zwischenwänden 3 montiert, wie in Fig. 4 gezeigt. Die Stirnseiten der Zwischenwände 3 sind dazu abwechselnd mit Beschlägen 11 und Schließblechen 10 versehen, sodass sich die Zugangstür 9 dazwischen einfügen lässt. Die Montage der Türen 9 erfolgt z.B. werkzeuglos und lösbar.

Danach werden die Dachelemente 12 auf den oberen Kanten jeweils zweier benachbarter Zwischenwände 3 befestigt. Das bedeutet, dass jeweils einander (direkt) benachbarte Dachplatten einander (direkt) benachbarter Abteile 4 sich jeweils auf einer gemeinsamer Zwischenwand 3, genauer gesagt auf deren oberer Kante abstützen. Diese Dachelemente 12 sind bevorzugt kreissektor- oder trapezförmig ausgebildet und liegen über den Abteilen 4 bzw. begrenzen diese nach oben hin. Die obere Kante der Zwischenwände 3 weist eine Sicke 13 auf, die als integrierte Regenrinne dient und Regenwasser effektiv vom Zentrum 2 nach außen ableitet. Die Dachelemente 12 sind so ausgestaltet, dass sie die Sicke 13 freigeben, sodass Wasser von dem Dachelement 12 in die Sicke 13 laufen kann. Die Dachkonstruktion kann als Flachdach (siehe Fig. 3) oder mit leichtem Gefälle ausgeführt sein, siehe Fig. 1 und 2. Der Aufbau kann aus der Transportstellung in den Fig. 5 und 6 wie beschrieben erfolgen.

Der Abbau der Fahrradgarage erfolgt in umgekehrter Reihenfolge und ist ebenfalls werkzeuglos durchführbar und zwar von der in Fig. 4 dargestellten Gebrauchsstellung (ohen Dachelemente und Türblätter gezeigt):
Zunächst werden die Zugangstüren 9 von den Stirnseiten der Zwischenwände 3 gelöst. Dies ist z.B. durch die lösbare Montage ohne Werkzeug einfach möglich.

Danach erfolgt die Demontage der Dachelemente 12, die von den oberen Kanten der Zwischenwände 3 abgenommen werden. Auch diese sind werkzeuglos befestigt, etwa durch Einrasten oder Auflegen. Alternativ können diese auch form- und/oder kraftschlüssig, z.B. mittels Schrauben mit den Zwischenwänden 3 lösbar verbunden sein.

Im nächsten Schritt werden nun die Zwischenwände 3 vom Zentrum 2 gelöst. Je nach Ausführung werden dazu die Bolzen 6 entriegelt oder herausgezogen, sodass die Zwischenwände 3 aus den Aufnahmen an Deckplatte 7 und Bodenplatte 8 entnommen oder wie in den Fig. 5 und 6 dargestellt zusammengeklappt oder verschwenkt werden können. Falls die Zwischenwände 3 klappbar oder verschiebbar ausgeführt sind, können sie zusätzlich platzsparend zusammengelegt oder ineinandergeschoben werden.

Schließlich kann auch das Zentrum 2 demontiert werden, indem die Beine 18 des Ständers 17 entfernt oder eingeklappt werden, sodass die gesamte Konstruktion in kompakter Form transportiert oder gelagert werden kann.

Durch diesen modularen und werkzeuglosen Aufbau- und Abbauprozess ist die Fahrradgarage 1 besonders für temporäre Aufstellorte oder mobilen Einsatz geeignet, etwa bei Veranstaltungen, auf Messen oder im privaten Gebrauch mit saisonaler Nutzung.

Im Betrieb ermöglicht die Drehbarkeit des Zentrums 2 um die vertikale Drehachse eine einfache Ausrichtung der Abteile 4. Der modulare Aufbau der Garage 1 erlaubt eine flexible Anzahl an Abteilen 4, je nach Bedarf. Der Auf- und Abbau erfolgt vollständig werkzeuglos.

Die vorliegende Erfindung löst die eingangs genannte Aufgabe durch die Kombination einer modular aufgebauten, leicht transportierbaren Fahrradgarage, deren Bauteile werkzeuglos montierbar sind und die über sichere und individuell zugängliche Abteile verfügt. Insbesondere erlaubt die Konstruktion mit radial angeordneten, lösbaren Zwischenwänden eine platzsparende Lagerung und einen schnellen Aufbau vor Ort. Die Kombination mit elektronischen Zutrittssystemen erhöht den Komfort und die Sicherheit erheblich.

## Patentansprüche

1. Fahrradgarage (1) zur Aufnahme mehrerer Zweiräder, insbesondere Fahrräder,
a) mit mehreren Zwischenwänden (3), die radial von einem Zentrum (2) der Fahrradgarage (1) nach außen verlaufen,
b) wobei jeweils zwei einander benachbarte Zwischenwände (3) ein Abteil (4) begrenzen,
c) wobei jedes Abteil (4) in einer Gebrauchsstellung der Zwischenwände (3) geeignet ist, ein Zweirad darin aufzunehmen,
d) wobei die Zwischenwände (3) lösbar mit dem Zentrum (2) befestigt sind, sodass sie aus der Gebrauchsstellung in eine Transportstellung überführbar sind, in der der von den Zwischenwänden (3) begrenzte Raum gegenüber der Gebrauchsstellung verringert ist.

2. Fahrradgarage (1) nach Anspruch 1, **dadurch gekennzeichnet, dass** mehrere Abteile gemeinsam einen ringförmigen Raum um das Zentrum (2) der Fahrradgarage (1) ausbilden, wobei bevorzugt in einem Querschnitt um eine vertikale Drehachse der Raum in der Gebrauchsstellung entweder einem Kreissektor mit radial außen vorgesehener runder Außenkontur oder im Wesentlichen einem Trapez mit flacher radial äußerer Seite entspricht.

3. Fahrradgarage (1) nach einem der vorhergehenden Ansprüche, **dadurch gekennzeichnet, dass** die lösbare Befestigung insbesondere eine
a) klappbare,
b) verschiebbare,
c) herausnehmbare oder
d) aus mehreren in einander schiebbaren Segmenten bestehende Ausführung der Zwischenwände (3) umfasst.

4. Fahrradgarage (1) nach einem der vorhergehenden Ansprüche, **dadurch gekennzeichnet, dass** die Fahrradgarage (1) nach Art eines Rondells oder Karussells aufgebaut ist und um eine im Wesentlichen vertikale Drehachse drehbar ist, wobei das Zentrum (2) insbesondere auf einem Ständer (17) drehbar gelagert ist, der bevorzugt mindestens drei Beine (18) aufweist, die am Umfang um das Zentrum (2) verteilt sind, wobei die Beine bevorzugt lösbar befestigbar sind.

5. Fahrradgarage (1) nach einem der vorhergehenden Ansprüche, **dadurch gekennzeichnet, dass** es sich insbesondere um eine überdachte Fahrradgarage (1) handelt, bei der die Abteile jeweils durch ein Dachelement (12) nach oben hin abgeschlossen sind, wobei bevorzugt die Dachelemente (12) kreissektor- oder trapezförmig ausgebildet sind, wobei jeweils ein Dachelement (12) bevorzugt auf den oberen Kanten einander direkt benachbarter Zwischenwände (3) angeordnet ist, wobei insbesondere die obere Kante der Zwischenwand (3) eine Sicke (13) aufweist, die zur Ableitung von Regenwasser von der Mitte nach radial außen dient und damit zugleich die Regenrinne bildet, wobei die Sicke (13) insbesondere einteilig mit der jeweiligen oberen Kante der Zwischenwand (3) ausgeführt ist, und bevorzugt das Dach als Flachdach oder mit Gefälle ausgebildet ist, wobei insbesondere das Gefälle vom Zentrum (2) der Fahrradgarage (1) nach radial außen verläuft.

6. Fahrradgarage (1) nach einem der vorhergehenden Ansprüche, **dadurch gekennzeichnet, dass** die Fahrradgarage (1) in Draufsicht mehreckig oder kreisförmig ausgeführt ist.

7. Fahrradgarage (1) nach einem der vorhergehenden Ansprüche, **dadurch gekennzeichnet, dass** das Zentrum (2) oben eine Deckplatte (7) und unten eine Bodenplatte (8) aufweist, an denen die Zwischenwände (3) jeweils befestigt, insbesondere eingehangen sind, wobei die Befestigung bevorzugt über Bolzen (6) erfolgt, die in einen Rastmechanismus in mindestens der Deckplatte (7) oder der Bodenplatte (8) oder beiden eingreifen, wobei insbesondere die Zwischenwände (3) um die Achse eines solchen Bolzens (6) verschwenkbar sind, um den zwischen zwei Zwischenwänden (3) begrenzten Raum eines Abteils (4) zu verringern, oder durch Lösen der Bolzen (6) von der Deck- und Bodenplatte (7, 8) lösbar entfernbar sind.

8. Fahrradgarage (1) nach einem der vorhergehenden Ansprüche, **dadurch gekennzeichnet, dass** die Abteile jeweils eine Zugangstür (9) auf der radial äußeren Seite aufweisen.

9. Fahrradgarage (1) nach einem der vorhergehenden Ansprüche, **dadurch gekennzeichnet, dass** die Stirnseiten der einander benachbarten Zwischenwände (3) abwechselnd mit Beschlägen (11) und Schließblechen (10) versehen sind, sodass sich gemeinsam mit einer zwischen den einander direkt benachbarten Zwischenwänden (3) angeordneten Zugangstür (9) eine verschließbare Verbindung ergibt, wobei die Zugangstür (9) insbesondere lösbar an den Zwischenwänden (3) montierbar ist.

10. Fahrradgarage (1) nach einem der vorhergehenden Ansprüche, **dadurch gekennzeichnet, dass** jedes Abteil (4) eine Haltevorrichtung (14) aufweist, die so eingerichtet ist, dass ein Zweirad von einer horizontalen Abstellposition, in der es auf zwei Rädern steht, in eine vertikale Position überführt und dabei angehoben wird.

11. Fahrradgarage (1) nach einem der vorhergehenden Ansprüche, **dadurch gekennzeichnet, dass** das lösbare Befestigen der Zwischenwände (3) und der Türen (9) sowie der Dachelemente (12) werkzeuglos und ausschließlich von Hand erfolgt.

12. Fahrradgarage (1) nach einem der vorhergehenden Ansprüche, **dadurch gekennzeichnet, dass** jeder Zugangstür und damit jedem Abteil (4) ein bevorzugt elektronisches Schloss zugeordnet ist, das die jeweilige Zugangstür verschließen oder öffnen kann.

13. Fahrradgarage (1) nach einem der vorhergehenden Ansprüche, **dadurch gekennzeichnet, dass** die Fahrradgarage (1) mit einem elektronischen Zugangskontrollsystem zur selektiven Freigabe einzelner Abteile versehen ist.

14. Verfahren zum Auf- und Abbau einer Fahrradgarage (1) nach einem der Ansprüche 1 bis 13, umfassend die folgenden Schritte:
a) Bereitstellen eines Zentrums (2),
b) Befestigen mehrerer Zwischenwände (3) radial vom Zentrum (2) nach außen in einer lösbaren Weise, derart, dass jeweils zwei einander benachbarte Zwischenwände (3) ein Abteil (4) begrenzen, sodass jedes Abteil (4) in einer Gebrauchsstellung der Zwischenwände (3) geeignet ist, ein Zweirad darin aufzunehmen,
c) Überführen der Zwischenwände (3) aus einer Gebrauchsstellung, in der die Abteile (4) zur Aufnahme von Zweirädern geeignet sind, in eine Transportstellung, in der der durch die Zwischenwände (3) begrenzte Raum verringert ist.

15. Verfahren nach Anspruch 14, umfassend die folgenden Schritte:
a) Lösbares Befestigen oder Demontieren der Zugangstüren (9) auf der radial äußeren Seite zwischen benachbarten Zwischenwänden (3), und
b) Lösbares Befestigen oder Demontieren der Dachelemente (12) auf den oberen Kanten der Zwischenwände (3).
